**Europäisches Patentamt**

**European Patent Office**

**Office européen des brevets**

(19)

(11) Veröffentlichungsnummer: **0 034 814**
**B1**

(12) # EUROPÄISCHE PATENTSCHRIFT

(45) Veröffentlichungstag der Patentschrift:
08.05.85

(21) Anmeldenummer. 81101201.2

(22) Anmeldetag: 20.02.81

(51) Int. Cl.⁴: **B 60 K 17/16,** B 60 K 17/08,
F 16 H 3/08

(54) Getriebe für Kraftfahrzeuge.

(30) Priorität: **23.02.80 DE 3006811**

(43) Veröffentlichungstag der Anmeldung:
**02.09.81 Patentblatt 81/35**

(45) Bekanntmachung des Hinweises auf die Patenterteilung:
**08.05.85 Patentblatt 85/19**

(84) Benannte Vertragsstaaten:
**AT BE CH DE FR GB IT LI LU NL SE**

(56) Entgegenhaltungen:
**AT - B - 194 718**
**DE - A - 1 655 918**
**DE - A - 2 438 561**
**DE - A - 2 714 234**
**DE - A - 2 921 047**
**DE - B - 1 023 337**
**GB - A - 1 514 454**
**GB - A - 2 031 076**

(73) Patentinhaber: **Interparte Aktiengesellschaft,
Aeulestrasse 5 Postfach 470, FL-9490 Vaduz (LI)**

(72) Erfinder: **Ertl, Herbert, Dr. Sauermann-Weg 13,
D-8130 Starnberg (DE)**

(74) Vertreter: **Patentanwaltsbureau Scheidegger, Zwicky &
Co., Stampfenbachstrasse 48 Postfach, CH-8023 Zürich
(CH)**

## Beschreibung

Die Erfindung betrifft eine Getriebeanordnung für ein Kraftfahrzeug, insbesondere Geländefahrzeug, mit einem Schaltgetriebe zum Einschalten verschiedener Gänge, einem nachgeordneten Differentialgetriebe zum Verteilen des Drehmomentes auf verschiedene Achsen und einem zwischen Schaltgetriebe und Differentialgetriebe angeordneten Vorgelegegetriebe für die Anpassung der Fahrgeschwindigkeit bei Fahrt im Straßenverkehr oder im Gelände.

Der vorliegenden Erfindung liegt die Aufgabe zugrunde, eine Getriebeanordnung für ein Kraftfahrzeug zu schaffen, die für die Verwendung in einem Gelände- und Nutzfahrzeug, insbesondere für den Einsatz in nicht-industrialisierten Ländern möglichst einfach in der Konstruktion und im Wartungsaufwand ist. Die Aufgabe bestand daher auch darin, verschiedene Funktionen für den Fahrzeugantrieb wie auch für den Antrieb von Arbeitsgeräten baulich zusammenzufassen, eine vielseitige Verwendbarkeit in bezug auf den Zusammenbau mit unterschiedlichen Motortypen zu erreichen, damit Antriebsmotoren mit verschiedener Drehzahl unter Zwischenschaltung einer Kupplung direkt angeflanscht werden können, wobei ferner auch im Hinblick auf die Verwendung in einem Geländefahrzeug, das auch schwimmfähig ausgebildet sein kann, die Möglichkeit bestehen soll, im Hinblick auf die Lage des Fahrzeugschwerpunktes die günstigste Einbaulage für die Getriebeanordnung wählen zu können, wobei letztere auch um 180° gewendet einzubauen sein soll, wodurch das Hauptgewicht weiter vorne oder weiter hinten im Fahrzeug zu liegen kommt, was aber voraussetzt, daß beim umgekehrten Einbau der Getriebeanordnung allen Getriebestufen ein umgekehrter Drehrichtungssinn erteilt werden kann.

Ferner soll die Getriebeanordnung auch noch eine Anpassung der Fahrgeschwindigkeiten an die jeweils erforderliche Betriebsart ermöglichen, d. h. an den Fahrbetrieb im Straßenverkehr oder den Fahrbetrieb im Gelände, so daß die Gangschaltung für beide Betriebsarten zur Verfügung steht. Ein dafür erforderliches zweistufiges Vorschaltgetriebe ist daher zwischen dem Schaltgetriebe und dem Differentialgetriebe angeordnet. Eine solche Ausgestaltung ist bereits aus der DE-OS 2 921 047 für einen Traktor bekannt. Bei diesem Getriebe mit einer ziemlich großen Baulänge sind jedoch die verschiedenen Getriebestufen in einem aus mehreren Teilen zusammengebauten Gehäuse untergebracht. Bei der bekannten Konstruktion wird das Ziel verfolgt, ein Getriebe mit ständig in Eingriff befindlichen Zahnrädern mit weniger als die bisher übliche Anzahl von Zahnrädern für eine bestimmte Anzahl von Geschwindigkeitsstufen bauen zu können.

Wie vorstehend erläutert wurde, ist die der vorliegenden Erfindung zugrunde liegende Aufgabe auf die Anpaßbarkeit der Getriebeanordnung an verschiedene Antriebsmotoren mit unterschiedlichen Drehzahlen und auf verschiedene Einbaumöglichkeiten der Getriebeanordnung gerichtet, wobei alle Elemente sowie ferner ein Nebengetriebe für den Antrieb von Arbeitsgeräten eine bauliche Einheit bilden sollen. Diese Aufgabe wird durch die im Anspruch angeführten Maßnahmen gelöst.

Die Erfindung wird nachfolgend anhand der Zeichnungen näher erläutert. Es zeigt

Fig. 1 eine schematische Darstellung des Getriebeaufbaus mit angeschlossenem Reduktionsgetriebe in vertikaler Lage,

Fig. 2 eine Draufsicht auf einen Teilschnitt entlang der Linie A-A gemäß Fig. 1,

Fig. 3 eine Draufsicht auf einen Teilschnitt entlang der Linie B-B gemäß Fig. 1, mit angeschlossenem Reduktionsgetriebe, in horizontaler Lage,

Fig. 4 einen Teilschnitt entlang der Linie C-C gemäß Fig. 3,

Fig. 5 eine schematische Draufsicht auf ein Ausführungsbeispiel mit paralleler Anordnung von Motor und Getriebeanordnung.

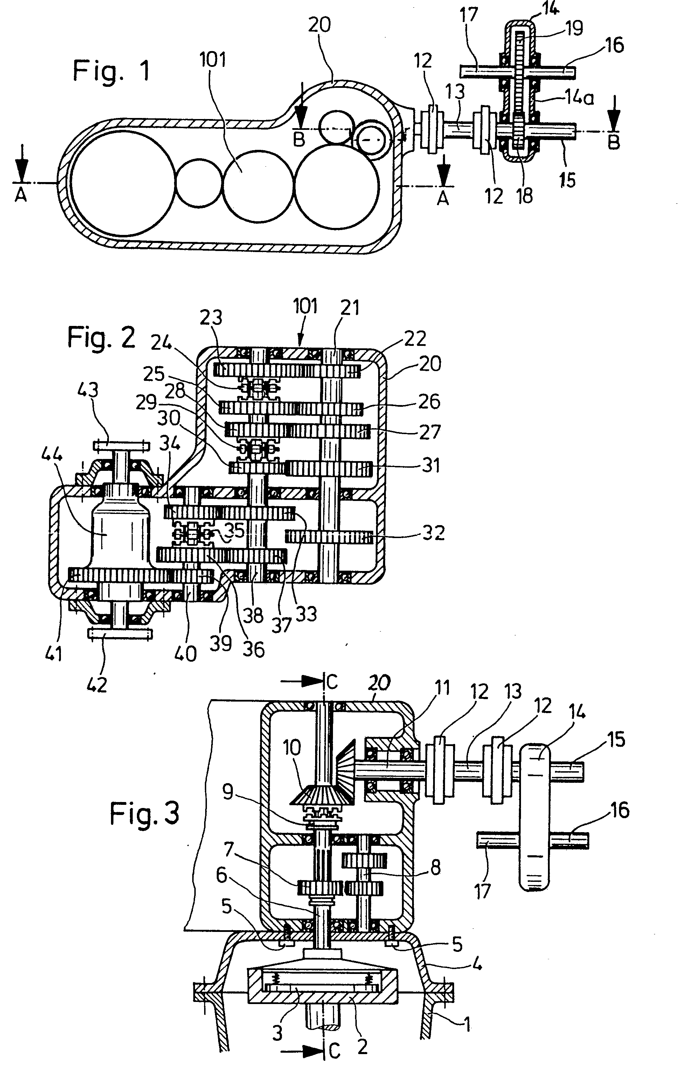

Das in den Fig. 1 bis 5 schematisch dargestellte Getriebe nach der Erfindung ist für Nutzfahrzeuge, insbesondere Geländefahrzeuge, bestimmt und setzt sich im wesentlichen aus einer Vorgelegestufe 7, 32, einem Schaltgetriebe 21-31, einem Differentialgetriebe 39, 41 für den Achsantrieb 44 und einem Nebengetriebe 10, 11 zusammen, wobei die vorgenannten Getriebeaggregate in einem gemeinsamen Gehäuse 20 zusammengefaßt sind. Der komplette Getriebeblock 101 ist über eine mit einer Schwungscheibe 2 zusammengebauten Schaltkupplung 3 direkt mit dem Motor 1 gekoppelt. Um eine universelle Anwendung für verschiedene Fahrzeuge und Zusatz- bzw. Sondergeräte zu ermöglichen, sind die einzelnen Getriebeaggregate in Modulbauweise ausgestaltet und nach dem Baukastensystem zusammensetzbar.

Zwischen dem Getriebeblock 101 und dem Motor 1 ist ein Kupplungsgehäuse 4 angeordnet, das mittels Schrauben 5 an das Gehäuse 20 des Getriebeblocks 101 angeflanscht ist und das als sog. Adaptionsgehäuse ausgebildet ist, so daß verschiedene Motortypen mit angepaßten Kupplungsgehäuseglocken an den Getriebeblock 101 angebaut werden können. Zwischen dem Motor 1 und dem Schaltgetriebe 21-31 ist die Vorgelegestufe 7, 32 angeordnet, mit welcher unterschiedliche Motordrehzahlen auf gleiche Getriebedrehzahl reduziert werden können, wobei die Anpassung an verschiedene Motordrehzahlen durch Änderung der Übersetzungsverhältnisse in der Vorgelegestufe 7, 32 erfolgt. Die Verwendung dieser Vorgelegestufe 7, 32 führt bei niedertourigen Motoren ein höheres Drehmoment bei gleicher Getriebebelastung ein, wobei sich hier eine Untersetzungsstufe erübrigt. Mit den gleichen Getriebekomponenten können aber auch stärkere Motoren mit geringerer Drehzahl verwendet werden.

Damit außerdem die gesamten Getriebestufen in zwei verschiedenen Drehrichtungen laufen können, ist der Vorgelegestufe 7, 32 ein Umkehrzahnradpaar 8 zugeordnet. Dadurch ist es möglich, daß das Getriebe selbst in zwei Einbaulagen angeordnet werden kann, also einmal mit dem Differential 39, 41 in Fahrtrichtung und einmal gegen die Fahrtrichtung. Dies führt dazu, daß der gesamte Antriebsblock vor und hinter der nicht dargestellten Antriebsachse gelagert werden kann. Diese gerade für Geländefahrzeuge und Nutzfahrzeuge besonders hervorzuhebende Variationsmöglichkeit erlaubt die Festlegung günstigster Fahrzeugschwerpunkte und schafft zahlreiche Möglichkeiten für den Anbau spezieller Arbeitsgeräte.

Um auch eine Anpassung der Fahrgeschwindigkeiten an die jeweils erforderliche Betriebsart — also Fahrbetrieb im Straßenverkehr und Fahrbetrieb im Gelände — zu ermöglichen, ist ein zweistufiges Vorgelegegetriebe 33-38 zwischen dem Schaltgetriebe 21-31 und dem Differentialgetriebe 39, 41 eingebaut. Das Schaltgetriebe 21-31 herkömmlicher Bauart weist auf einer Getriebe-Primärwelle 21 ein Gangrad 22 für den ersten Gang auf, das mit einem auf der parallel angeordneten Sekundär-Getriebewelle 38 angeordneten Schaltrad 23 mittels der Schaltklaue 24 in Eingriff bringbar ist. Mit derselben Schaltklaue 24 wird auch das Schaltrad 25 auf der Getriebewelle 38 mit dem Gangrad 26 für den zweiten Gang in Eingriff gebracht, das auf der Primär-Getriebewelle 21 angeordnet ist. Auf dieser Getriebewelle 21 sind ferner das Gangrad 27 für den dritten Gang und das Gangrad 31 für den vierten Gang angeordnet. Mittels der Schaltklaue 29 werden das auf der Getriebewelle 38 angeordnete Schaltrad 28 für den dritten Gang mit dem Gangrad 27 in Eingriff gebracht und ferner das Schaltrad 30 für den vierten Gang mit dem Gangrad 31 in Eingriff gebracht.

Das zweistufige Vorgelegegetriebe 33-38, das, wie vorstehend erläutert, für die Anpassung der Fahrgeschwindigkeiten an die jeweils erforderliche Betriebsart (im Straßenverkehr bzw. im Gelände) dient, weist ein auf der Sekundär-Getriebewelle 38 angeordnetes Getriebe-Vorgelegezahnrad 33 für den Schnellgang auf, welches mit einem auf der Getriebe-Vorgelegewelle 40 angeordneten Vorgelege-Schaltrad 34 mittels der Schaltklaue 35 in Eingriff bringbar ist. Mittels der Schaltklaue 35 ist ferner ein Vorgelege-Schaltrad 36 für den Langsamgang mit dem auf der Getriebewelle 38 angeordneten Vorgelegezahnrad 37 in Eingriff bringbar. Ferner ist auf der Getriebevorgelegewelle 40 das Differential-Antriebsritzel 39 des Differentialgetriebes 39, 41 angeordnet, welches mit dem Differentialantriebszahnrad 41 in Eingriff steht. Durch letzteres werden die Achsabtriebswellen 42 und 43 des Achsantriebs 44 angetrieben.

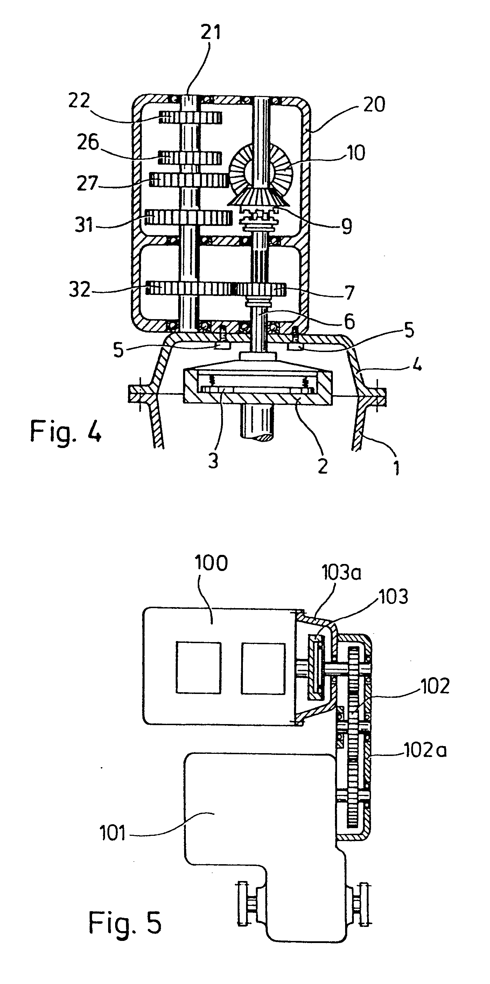

In Fig. 5 ist dargestellt, daß im Bedarfsfall, wenn der aus einem Motor 100 und einem Getriebeblock 101 bestehende Antrieb besonders schmal gebaut werden muß, der Getriebeblock 101 und der Motor 100 parallel zueinander angeordnet und beide Aggregate mittels eines Zwischengetriebes 102 in Funktionsverbindung gesetzt werden können. Hierzu wird das Kupplungsgehäuse 4 der Ausführungsform gemäß Fig. 1—4 durch ein Zwischengetriebegehäuse 102a und ein Kupplungsgehäuse 103a für die Schaltkupplung 103 ersetzt.

Das erfindungsgemäße Getriebe ist noch vielseitiger. Um den Betrieb der angeschlossenen Arbeitsgeräte sowohl bei fahrendem als auch bei stehendem Fahrzeug aufnehmen zu können, ist ein Nebengetriebe 10, 11 mit Schalteinrichtung 9 an der Vorgelegewelle 6 der Vorgelegestufe 7, 32 angeordnet. Wenn ein einstufiges Reduktionsgetriebe 14 an diesem Nebengetriebe 10,11 zur Drehzahlreduzierung auf die Nebenabtriebs-Normdrehzahl angeordnet ist, dann sind bei diesem Reduktionsgetriebe sowohl die Welle 15 des Antriebsritzels 18 als auch die Welle 16, 17 des Abtriebsrades 19 aus dem Gehäuse des Reduktionsgetriebes 14 nach außen geführt. Somit kann an beiden Wellen Leistung mit unterschiedlicher Drehzahl abgenommen werden. Somit können mit einem einzigen Motor- und Getriebeblock nicht nur sämtliche möglichen Fahrfunktionen durchgeführt werden, sondern gleichzeitig auch noch schnellaufende Pumpen und Elektromotoren mit hoher Drehzahl und genormte Arbeitsmaschinen mit niederer Drehzahl laufen gelassen werden. Die Verbindung zwischen dem Nebengetriebe 10, 11 und dem Reduktionsgetriebe 14 erfolgt durch eine Welle 13 und zwei elastische Gelenke 12, wodurch die Lage des Reduktionsgetriebes 14 dem jeweiligen Fahrzeug ohne besondere Einbauschwierigkeiten angepaßt werden kann.

Führt man die Welle 16, 17 des Abtriebszahnrades 19 des Reduktionsgetriebes 14 — wie bereits erwähnt — nach beiden Seiten aus dem Gehäuse heraus, so kann damit ein Kraftanschluß auf beiden Seiten erfolgen, allerdings mit unterschiedlicher Drehrichtung in bezug auf die Stirnseite des jeweiligen Antriebswellenstumpfes 16 bzw. 17. Das Gehäuse des Reduktionsgetriebes 14 kann in beliebiger Winkellage bezogen auf die Achse des Ritzels 18 am Fahrzeug angebaut werden. Dadurch kann die Abtriebswelle 16, 17 in jeder beliebigen Lage auf einem Kreisbogen um die Achse des Ritzels 18 mit dem Radius gleich dem Abstand zwischen der Welle 15 und der Welle 16, 17 positioniert werden.

**Patentanspruch**

Getriebeanordnung für ein Kraftfahrzeug, insbesondere Geländefahrzeug, mit einem Schaltgetriebe (21-31) zum Einschalten verschiedener Gänge, einem nachgeordneten Differentialgetriebe (39, 41) zum Verteilen des Drehmomentes auf verschiedene Achsen, und einem zwischen Schaltgetriebe (21-31) und Differentialgetriebe (39, 41) angeordneten Vorgelegegetriebe (33-38) für die Anpassung der Fahrgeschwindigkeit bei Fahrt im Straßenverkehr oder im Gelände, dadurch gekennzeichnet, daß vor dem Schaltgetriebe (21-31) eine schaltbare Vorgelegestufe (7, 32) angeordnet ist, durch welche bei wahlweiser Verwendung von verschiedenen Antriebsmotoren mit unterschiedlichen Drehzahlen eine annähernd gleiche Eingangsdrehzahl in das Schaltgetriebe (21-31) ermöglicht wird, wobei der Vorlegestufe (7, 32) ein Umkehrgetriebe (8) für die Umkehr der Drehrichtung aller Getriebestufen zugeordnet ist, daß ferner die Eingangswelle (6) der Vorgelegestufe (7, 32) ein ein- und ausschaltbares Nebengetriebe (10, 11) für durch das Getriebe antreibbare Arbeitsgeräte antreibt, und daß die Vorgelegestufe (7, 32), das Umkehrzahnradpaar (8), das Schaltgetriebe (21-31), das Vorgelegegetriebe (33-38), das Differentialgetriebe (39, 41) und das Nebengetriebe (10, 11) in einem gemeinsamen Gehäuse (20) angeordnet sind.

## Claim

Transmission for a motor vehicle, especially a cross-country vehicle, having a change-speed gear (21-31) for engaging different gear ratios, a subordinated differential gear (39, 41) for distributing the torque to different axles, and layshaft gearing (33-38) arranged between the change-speed gear (21-31) and the differential gear (39, 41) for the adaptation of the speed of travel in travelling in road traffic or across country, characterised in that before the change-speed gear (21-31) there is arranged a shiftable layshaft gearing stage (7, 32) by means of which, when selectably using different drive motors with different r.p.ms an approximately equal input r.p.m. into the change-speed gear (21-31) is rendered possible, while the layshaft gearing stage (7, 32) is associated with a reversing gear (8) for the reversal of the direction of rotation of all gear stages; further in that the input shaft (6) of the layshaft gearing stage (7, 32) drives an engageable and disengageable auxiliary gear (10, 11) for implements drivable by the transmission; and in that the layshaft gearing stage (7, 32), the reversing toothed wheel pair (8), the change-speed gear (21-31), the layshaft gearing (33-38), the differential gear (39, 41) and the auxiliary gear (10, 11) are arranged in one common housing (20).

## Revendication

Système d'engrenages de transmission pour un véhicule motorisé, en particulier un véhicule tout-terrain, avec un mécanisme de changement de vitesse à engrenages (21-31) pour l'engagement de différentes vitesses, un engrenage différentiel (39, 41) disposé à la suite pour la répartition des couples sur différents essieux et un mécanisme d'engrenages intermédiaire (33-38), monté entre le mécanisme de changement de vitesse à engrenages (21-31) et l'engrenage différentiel (39, 41), pour l'adaptation de la vitesse de marche lors de la marche en circulation routière ou en terrain, caractérisé en ce qu'avant le mécanisme de changement de vitesse à engrenages (21-31) est disposé en étage d'engrenages intermédiaire enclenchable (7, 32) par lequel, lors de l'utilisation sélective de divers moteurs d'entraînement à différentes vitesses de rotation, une vitesse de rotation approximativement égale d'entrée au mécanisme de changement de vitesse à engrenages (21-31) devient possible, auquel cas un mécanisme d'engrenages de renversement (8), pour l'inversion du sens de rotation de tous les étages d'engrenages, est associé à l'étage d'engrenages intermédiaire (7, 32), en ce qu'en outre l'arbre d'entrée (6) de l'étage d'engrenages intermédiaire (7, 32) entraîne un engrenage auxiliaire enclenchable et déclenchable (10, 11) pour des ustensiles de travail susceptibles d'être entraînés par le système d'engrenages de transmission, et en ce que l'étage d'engrenages intermédiaire (7, 32), la paire de roues dentées d'inversion (8), le mécanisme de changement de vitesse à engrenages (21-31), le mécanisme d'engrenages intermédiaire (33-38), l'engrenage différentiel (39, 41) et l'engrenage auxiliaire (10, 11) sont montés dans un carter commun (20).

0 034 814

Fig. 1

Fig. 2

Fig. 3

Fig. 4

Fig. 5